# DEMANDE DE BREVET EUROPEEN

(11) **EP 3 057 102 A1**
(43) Date de publication de la demande: **17.08.2016**
(21) Numéro de dépôt: 16152728.8
(22) Date de dépôt: 26.01.2016
(51) Int. Cl.: H01B 1/02, H01B 7/282, H01B 7/04

(54) **CÂBLE DE TRANSPORT D'ÉNERGIE ÉLECTRIQUE EN ALUMINIUM**

(30) Priorité: 12.02.2015 FR 1551138
(71) Demandeur: Nexans, 75008 Paris (FR)
(72) Inventeur: COTTART, Jean-Jacques, 02100 Omissy (FR); LECLERCQ, Philippe, 02420 Levergies (FR)
(74) Mandataire: Feray, Valérie

(57) **Abrégé**

Câble de transport d'énergie électrique en aluminium ou alliage d'aluminium.

Le câble comporte un conducteur (1) unique massif en aluminium ou alliage d'aluminium qui a subi un recuit spécifique, et qui est entouré d'un ruban (2) d'étanchéité (optionnel) d'un revêtement (3) isolant réticulé et d'une gaine (4) de protection réticulée en matériaux synthétiques souples.

II présente la possibilité de réaliser des rayons de courbure égaux à quatre fois son diamètre extérieur au minimum.

## Description

L'invention concerne un câble de transport d'énergie électrique en aluminium ayant une très grande plage d'application.

Les câbles de transport d'énergie électrique en aluminium font l'objet de nombreux usages qui ont permis de relever quelques inconvénients. Ainsi, plus particulièrement pour les câbles multibrins, lorsque les brins conducteurs des câbles sont sujets aux oxydations naturelles et/ou accidentelles de surface, il en résulte une réduction sensible de la conductivité linéaire du câble pouvant atteindre jusqu'à 10%. Cette oxydation et perte de conductivité dans certains cas provoquent des points d'échauffement pouvant entrainer parfois des incendies.

Pour des applications dans le domaine éolien, par exemple, les installations doivent être garanties pour des durées de 20 ans ou plus. Il est donc indispensable d'éviter tout risque d'oxydation des brins en aluminium des âmes conductrices des câbles et donc de maintenir la qualité conductrice des âmes dans le temps d'usage prescrit. De plus, les câbles sont isolés par des matériaux d'isolation et protégés par une gaine en matériau à base de caoutchouc. Les matériaux utilisés en isolation et ou en gainage de protection sont mis en place selon le processus d'extrusion et de vulcanisation (par exemple dans des lignes de vulcanisation ou autres systèmes connus) afin de créer le réseau interne de réticulation des polymères. Pendant l'opération de réticulation, aussi appelée vulcanisation, il existe un risque de pénétration de l'eau (ou d'humidité) dans les interstices des fils constitutifs des âmes des câbles.

Par ailleurs, au cours des opérations de préparation, de montage ou d'installation des câbles, en usine ou sur le site d'utilisation, ou pendant leur transport, de l'humidité ou de l'eau peut également s'introduire accidentellement dans le câble.

L'humidité emprisonnée ou l'eau emprisonnée dans le câble, en plus de la pré-oxydation superficielle naturelle de l'aluminium, ou de l'alliage à forte teneur d'aluminium, des brins des âmes conductrices des câbles, entraineront une forte oxydation de surface qui ne fera que continuer à se développer au cours des mois ou des années d'autant plus que les câbles d'énergie s'échauffent au passage d'intensité de courant accélérant alors encore les phénomènes d'oxydation.

L'oxydation de surface crée un oxyde d'aluminium de type Al203 connu comme ayant des propriétés d'isolation ou de bien moins bonne conductivité électrique que l'aluminium ou alliage d'aluminium.

Il y a, en cas d'échauffement du câble en charge, un risque sérieux de détérioration de la surface des brins du câble et d'oxydation du câble.

En résumé, le premier problème technique posé par les câbles de transport d'énergie électrique en aluminium, notamment pour un service de longue durée, est d'éviter l'introduction d'eau ou d'humidité importante dans le câble et donc l'oxydation du câble.

Les documents US 2009/0250 241 et US 2014/0138 115 décrivent des câbles à conducteur massif en aluminium entouré d'une ou plusieurs gaines isolantes.

Le document FR 2 009 027 décrit un fil d'alliage d'aluminium de faible diamètre (2,05 mm) comportant une teneur en fer comprise entre 0,45 et 0,95%, pour préparer un conducteur à plusieurs filaments. Ces trois caractéristiques sont considérées comme des inconvénients.

Le document US 3 984 619 décrit un câble conducteur à base d'alliage d'aluminium contenant 0,3 à 1,0% de fer, comportant une pluralité de conducteurs entourés pour une gaine imperméable remplie d'un produit de nature graisseuse. Ces trois caractéristiques sont considérées comme des inconvénients.

Le document EP 1 073 067 décrit un câble formé d'un faisceau de fils de cuivre ou d'aluminium enroulés en hélice, et revêtu d'une pellicule de matériau semi-conducteur, d'une couche de matériau isolant, d'une éventuelle seconde pellicule de matériau semi-conducteur, d'un tube conducteur en aluminium et d'une gaine de protection mécanique. La disposition des fils en faisceau et la présence de gainage métallique sont considérés comme des inconvénients.

Le problème technique posé par ces câbles à conducteur massif est toutefois leur rigidité.

Il est en effet difficile de les manipuler et de les courber, notamment pour leur branchement sur une installation fixe ou mobile, en particulier dans le domaine éolien où l'espace de travail ou de branchement est assez réduit.

Un but de l'invention est donc de proposer un câble de transport d'énergie électrique en aluminium ou alliage d'aluminium qui ne présente pas ces inconvénients.

L'invention a pour objet un câble de transport d'énergie électrique en aluminium ou alliage d'aluminium comportant un conducteur unique massif en aluminium ou alliage d'aluminium entouré d'une enveloppe isolante de protection, caractérisé en ce que le conducteur unique massif en aluminium a une section supérieure à 35 mm² et a subi un recuit.

Avantageusement, le recuit est effectué entre 320 et 480°C, et les durées de traitement sont de l'ordre de 4 heures à 36 heures.

La procédure de recuit est aussi dépendante de la quantité ou des longueurs d'âmes conductrices à traiter.

Le recuit de l'âme conductrice est adapté aux propriétés mécaniques de l'aluminium ou alliage d'aluminium avec des plages de force à la rupture de 50MPa à 90MPa (métrique SI) et des allongements minimaux à la rupture de 5 %, par exemple.

L'aluminium ou alliage d'aluminium utilisé a de plus une qualité diélectrique avec une teneur minimale de 99% d'aluminium afin que tous les paramètres mécaniques et électriques soient optimisés.

De manière avantageuse, le conducteur peut être entouré d'un ruban optionnel d'étanchéité à l'eau ou étanche à l'eau de type synthétique, de type polyester ou polymères techniques équivalents pouvant tenir les températures des procédés de vulcanisation prévus pour les matériaux polymériques d'isolation et de gainage.

Avantageusement, le conducteur métallique rubané ou non est entouré par un revêtement isolant synthétique en mélange réticulé.

Le mélange extrudé d'isolation peut être halogéné ou sans halogène.

De manière avantageuse, le revêtement isolant est entouré également par une gaine de protection en mélange synthétique réticulé approprié afin de garder les larges plages de températures de fonctionnement. Ce mélange peut être un matériau sans halogène ou halogéné.

Les matériaux utilisés sont à base de polymère(s) synthétique(s) ayant une large plage d'usage en températures : de très basses températures pour usages dynamiques voire pour usage statique, c'est à dire respectivement -40°C et - 60°C, à des hautes performances en température de service c'est à dire 90°C voire 110°C et 120°C ponctuellement pour cette configuration.

Avantageusement aussi, le câble ainsi fabriqué présente un rayon de courbure admissible égal à quatre fois son diamètre extérieur pouvant être installé facilement dans des zones ayant peu d'espace ou pour des branchements dans des armoires ou connexions équivalentes. La souplesse grandement améliorée ainsi obtenue pour un câble ayant une âme massive en aluminium ou alliage d'aluminium de fortes sections d'âme conductrice (Section > 35mm²) et un ensemble de mélanges de caoutchoucs synthétiques souples pour l'isolation et le gainage externe donnent des propriétés remarquables attendues pour les manipulations, installations, mise en place des câbles dans les espaces confinés tels que les tours des éoliennes ou les passages limités pour les câbles nécessitant de très faibles rayons de courbure proches des câbles souples avec des âmes conductrices finement divisées.

L'invention a encore pour objet un procédé de réalisation d'un câble de transport d'énergie électrique en aluminium, caractérisé par les étapes de :
a/ réaliser un conducteur massif en aluminium ou en alliage d'aluminium,
b/ lui faire subir un recuit spécialement adapté,
c/ le recouvrir d'une enveloppe isolante de protection en caoutchouc synthétique.

Avantageusement, à l'étape b-, le recuit est effectué entre 320 et 480°C et pour des durées de traitement comprises entre 8h et 24h. Idéalement le traitement peut être dans les paramètres suivants : 365°C + /- 10°C et une durée de 16 h + /- 1 h. La durée peut être adaptée selon les volumes ou quantités à traiter et les propriétés mécaniques à atteindre (force à la rupture et allongement à la rupture souhaités), la qualité de souplesse, la dureté finale, par exemple.

De manière avantageuse, à l'étape c-, l'enveloppe isolante de protection est constituée successivement :
- d'un ruban optionnel,
- d'un revêtement isolant à base de mélange en caoutchouc(s) synthétique(s) réticulé(s),
- d'une gaine à base de mélange en caoutchouc(s) synthétique(s) réticulé(s).

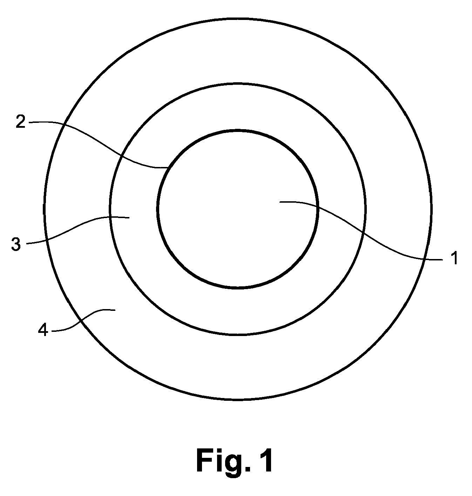

D'autres caractéristiques et avantages de l'invention ressortiront de la description qui suit faite avec référence au dessin annexé dans lequel la figure 1 représente une vue en coupe transversale d'un câble de transport d'énergie électrique en aluminium ou alliage d'aluminium selon un mode de réalisation de l'invention.

Le câble de transport d'énergie électrique comporte un conducteur 1 massif, en aluminium. Pour lui donner de la flexibilité, ce conducteur 1 a subi un recuit, effectué entre 320° C et 480° C.

Le conducteur 1 est entouré d'une enveloppe isolante de protection.

Avantageusement, le conducteur 1 est entouré d'un ruban 2 optionnel d'étanchéité à l'eau, qui peut être en papier ou en matière plastique (PET). Le conducteur 1 et le ruban 2 optionnel sont entourés par un revêtement isolant 3 à mélange réticulé, à base de caoutchouc d'éthylène-propylène (EPR).

Ce revêtement en caoutchouc synthétique isolant 3 est lui-même entouré par une gaine 4 à mélange réticulé à base de caoutchouc synthétique. Les constituants de l'enveloppe isolante sont réticulés par l'un des procédés conventionnels (sous pression de vapeur saturée, sous atmosphère inerte, en bain de sel, sous tunnel à air chaud, sous gainage de plomb, par exemple).

Le revêtement isolant 3 et la gaine 4 sont à base de composés de caoutchouc pour assurer le bon fonctionnement du câble dans une large gamme de températures, s'étendant de -40° C à +90° C avec des pointes à 105° C.

De préférence, le revêtement isolant 3 et la gaine 4 sont appliqués par extrusion.

Avec le recuit spécial précité du conducteur massif métallique 1 et l'application sur le conducteur 1 du revêtement isolant 3 et de la gaine 4, le câble peut être courbé avec un rayon égal à 4 x D (D étant le diamètre externe du câble terminé). Ce faible rayon de courbure admissible est particulièrement utile dans le domaine éolien dans les nacelles et tours à faibles espacements.

L'oxydation consécutive à l'humidification permanente dans l'atmosphère de la plupart des régions pour un câble d'aluminium est essentiellement un phénomène de surface. La solution proposée est d'utiliser un conducteur unique plutôt qu'un faisceau multibrin. Ainsi, pour une surface transversale de conducteur d'environ 300 mm², la surface extérieure de conducteur par unité de longueur est près de 7 fois plus faible pour un conducteur unique de diamètre voisin de 20 mm, que pour un faisceau multibrin d'environ 45 brins, ayant chacun un diamètre voisin de 3 mm.

Si un facteur de 7 au minimum est obtenu pour réduire les surfaces oxydées des âmes conductrices, la durée de fonctionnement du câble et les garanties de longue durée peuvent au minimum être du même ordre.

De préférence, le câble ainsi conçu dans son ensemble ne comporte pas forcement d'éléments halogénés pour les matériaux d'isolation 3 et de gainage 4 voire du ruban 2.

Il est souvent préféré cependant que le concept général du câble soit en matériaux totalement sans halogène par sécurité complémentaire pour les hommes et les équipements en cas d'incendie.

Le câble est prévu pour fonctionner sous des courants de types alternatifs A.C et/ou continus D.C. et sous des tensions de 600 V à 6 kV.

Le câble a été décrit dans un exemple de réalisation de câble de transport d'énergie électrique à âme simple, mais il est aussi possible de l'adapter au cas de câbles de transport d'énergie électrique à conducteurs multiples toujours avec des âmes massives de classe 1.

Selon l'invention, le conducteur massif comporte essentiellement de l'aluminium. Il peut comprendre une proportion de magnésium limitée, inférieure ou égale à 0.5%. Les autres métaux d'alliage, notamment le fer, sont à éviter.

Avec son conducteur massif recuit, le câble de transport d'énergie électrique décrit présente comme avantages d'avoir une surface extérieure réduite par rapport à un câble multibrin, d'où résulte une meilleure tenue à la corrosion dans le temps et pour le long terme, et d'avoir une souplesse améliorée par rapport aux câbles à conducteur massif de l'art antérieur.

## Revendications

1. Câble de transport d'énergie électrique en aluminium ou alliage d'aluminium comportant un conducteur unique massif en aluminium ou alliage d'aluminium entouré, d'une enveloppe isolante de protection, **caractérisé en ce que** le conducteur (1) unique massif en aluminium a une section supérieure à 35 mm² et a subi un recuit.

2. Câble selon la revendication 1 **caractérisé en ce que** le recuit est effectué entre 320 et 480° C.

3. Câble selon la revendication 2 **caractérisé en ce que** le conducteur (1) est entouré d'un ruban (2) optionnel.

4. Câble selon la revendication 2 ou 3 **caractérisé en ce que** l'enveloppe isolante de protection comporte un revêtement isolant (3) à base de mélange réticulé.

5. Câble selon la revendication 4 **caractérisé en ce que** l'enveloppe isolante de protection comporte une gaine de protection (4) à base de mélange réticulé, entourant le revêtement isolant (3).

6. Câble selon la revendication 2 **caractérisé en ce qu'**il présente un rayon de courbure admissible minimal égal à quatre fois son diamètre extérieur.

7. Procédé de réalisation d'un câble de transport d'énergie électrique en aluminium, **caractérisé par** les étapes de :
a) prendre un conducteur massif en aluminium,
b) lui faire subir un recuit,
c) le recouvrir d'une enveloppe isolante de protection.

8. Procédé selon la revendication 7, **caractérisé en ce qu'**à l'étape b-, le recuit est effectué entre 320 et 480°C pendant une durée comprise entre 8 et 24 heures.

9. Procédé selon la revendication 7, **caractérisé en ce qu'**à l'étape c-, l'enveloppe isolante de protection est constituée successivement :
- d'un ruban optionnel,
- d'un revêtement isolant à mélange réticulé,
- d'une gaine à mélange réticulé.
